# EUROPEAN PATENT SPECIFICATION

(11) **EP 1 285 742 B1**
(45) Date of publication and mention of the grant of the patent: **08.10.2008**
(21) Application number: 02017529.5
(22) Date of filing: 06.08.2002
(51) Int. Cl.: B29C 47/88

(54) **Optical film, method of manufacture thereof and sheet polarizer**
Optische Kunststofffolie, Verfahren zu deren Herstellung und Polarisator
Film optique, procédé de sa fabrication et polariseur

(30) Priority: 10.08.2001 JP 2001244494; 10.08.2001 JP 2001244499; 11.10.2001 JP 2001314102; 08.02.2002 JP 2002032798; 08.02.2002 JP 2002032799; 08.02.2002 JP 2002032800; 19.02.2002 JP 2002042014
(43) Date of publication of application: 26.02.2003
(73) Proprietor: Sekisui Chemical Co., Ltd., Osaka-shi Osaka 530-8565 (JP)
(72) Inventor: Sawada, Takahiko, Sekisui Chemical Co., Ltd., Mishima-gun, Osaka 618-8589 (JP); Ogino, Kentaro, Sekisui Chemical Co., Ltd., Kyoto-shi, Kyoto 601-8105 (JP); Nishimura, Katsumi,Sekisui Chemical Co., Ltd., Kyoto-shi, Kyoto 601-8105 (JP); Okada, Yasumasa, Taga-cho, Inukami-gun, Shiga 522-0314 (JP); Tabata, Hironori, Sekisui Chemical Co., Ltd., Kyoto-shi, Kyoto 601-8105 (JP); Nozato, Shoji, Sekisui Chemical Co., Ltd., Mishima-gun, Osaka 618-8589 (JP); Kobayashi, Hitoshi, Sekisui Chemical Co., Ltd., Mishima-gun, Osaka 618-8589 (JP)
(74) Representative: TER MEER - STEINMEISTER & PARTNER GbR

(56) References cited:
- EP-A- 0 591 536
- EP-A- 0 999 033
- US-A- 4 859 379
- US-A- 5 334 424
- US-A- 5 516 456
- PATENT ABSTRACTS OF JAPAN vol. 1999, no. 01, 29 January 1999 (1999-01-29) & JP 10 264237 A (SEKISUI CHEM CO LTD), 6 October 1998 (1998-10-06)
- PATENT ABSTRACTS OF JAPAN vol. 2000, no. 23, 10 February 2001 (2001-02-10) & JP 2001 170991 A (SUMITOMO BAKELITE CO LTD), 26 June 2001 (2001-06-26)

## Description

### BACKGROUND OF THE INVENTION

### FIELD OF THE INVENTION

The present invention relates to an optical film applicable for optical, display and other uses, a method for manufacture thereof and a sheet polarizer, and more particularly to an optical film which is obtainable by melt extrusion and exhibits a low optical strain, a method for manufacture thereof and a sheet polarizer using the optical film.

### DESCRIPTION OF RELATED ART

A need has recently arisen in optical and display uses for a film which is superior in transparency and low in residual phase difference. However, when such a film is manufactured by melt extrusion, a stress-induced strain is produced therein based on deformation thereof during film formation and remains as an optical strain.

This optical strain remains in the film as a phase difference. As a result, the use of the film for optical disc substrates and liquid crystal displays causes a serious problem.

As a means of reducing an optical strain, Japanese Patent Laid-Open Publication No. Hei 4-275129 discloses a method for manufacturing an optical film by extruding a polycarbonate resin at a resin temperature of 300 - 330 °C, i.e., at a temperature from (a glass transition temperature (Tg) + 150 °C) to (Tg + 180 °C), an air gap of 80 - 100 mm, and a chill roll temperature of 100 - 140 °C. This reference describes that a shear strain on extrusion and a shrinkage force of a film on cooling are well balanced to result in the provision of an optical film with an optical strain which does not exceed 5 x 10⁻⁵.

Also, Japanese Patent Laid-Open Publication No. 2000-280268 discloses a method for manufacturing an optical film which has a residual phase difference of not exceeding 10 nm by extruding a resin having a glass transition temperature Tg while temperatures of extrusion belts and rolls are maintained within the range from Tg to (Tg + 50 °C). This method results in obtaining a 0.1 - 2 mm thick film.

However, the manufacturing method described in Japanese Patent Laid-Open Publication No. Hei 4-275129 cannot be applied to a resin other than a polycarbonate resin. In case of using a norbornene resin, for example, which has many tertiary carbons in its molecular structure, a temperature at film formation becomes to be excessively high, thereby possibly causing deterioration of a film.

No specific method for manufacture of a thin optical film having a thickness of below 100 µm is described in Japanese Patent Laid-Open Publication No. 2000-280268. Also, there has been a concern that a film when removed from a belt may be elongated to leave an optical strain therein. If the optical strain remains in the film, a light passing through the film produces a phase difference, making it unsuitable for use in optical and display fields.

A phenomenon that a phase difference (optical strain) remains in a film occurs due to the monoaxial orientation of molecules in a film. The phase difference is produced and left in the film as the residual phase difference when a film-forming resin is deformed at Tg or higher temperatures and is proportional to a magnitude of a stress engendered during deformantion. The stress produced during deformation depends on the temperature and magnitude of deformation of the resin. Accordingly, if the magnitude of deformation remains constant, the stress varies with the resin temperature.

In the case where a film is obtained utilizing a melt extrusion process, a resin extruded from a die is generally drawn down to a target film thickness within an air gap, during which time a resin temperature drops. The lower the resin temperature, the higher the stress produced during deformation. The higher stress leads to the larger phase difference which is left behind.

Optical films for use in optical and display areas suffer from several problems including the residual phase difference that indicates a magnitude of an optical strain, and the dispersion of an optical axis in which direction the optical strain is produced.

In the effort to stabilize a contact between a chill roll and a resin and suppress the occurrence of an optical axis deviation, a method is generally used in which an air chamber, a touch roll, an overall pinning and the like are utilized to bring a film into contact with the chill roll by pressing. However, the use of such a method increases a stress applied to the film at the contact and has resulted in the tendency to increase the resiual phase difference.

For optical uses, noncrystalline thermoplastic resins are primarily employed. The use of a saturated norbornene resin, among them, is particularly advantageous, because it has superior heat resistance, high transparency, a low intrinsic birefringence and a low photoelastic coefficient. This makes a saturated norbornene resin film suitable for use as an optical film. Thus, it has been strongly demanded to devise a way to reduce a residual phase difference of an optical film made of a saturated norbornene resin and also suppress an optical axis deviation thereof.

On the other hand, in the optical and display areas, a demand has arisen for an optical film which is not only low in residual phase difference and an optical axis deviation but also high in thickness precision.

However, when an optical film is manufactured via melt extrusion of a thermoplastic resin, uneven deformation occurs during film formation to result in the problematic drop of thickness precision. In such a case, the stress accumulated in the film varies in level along the width direction. As a result, a residual phase difference is made problematically uneven. Also, when thickness precision is poor within a particular narrow range or when thickness increases or decreases within a specific range, both a residual phase difference and an optical axis in which direction an optical strain is produced vary. This has also been a problem.

A sheet polarizer having protective films provided on opposite sides of a polarizer has been used for a liquid crystal display (LCD). A typical polarizer comprises an iodine- or dichloric dye-adsorbed, oriented polyvinyl alcohol film. Examples of useful protective films include an untreated triacetylcellulose (TAC) film, an alkali-treated TAC film and the like.

The aforementioned protective film and other optical films have been manufactured by a casting process which is effective in providing films with superior optical and other physical properties.

However, a sheet polarizer using a TAC film obtained via such a casting process as a polarizer protecting film, because of a large photoelastic coefficient of the TAC film, has encountered the following problems in polarization characteristics: birefringence and optical axis deviation increase and light leakage occurs in the crossed nicol arrangement.

Various attempts have been made to solve such problems. For example, Japanese Patent Laid-Open Publication No. Hei 6-51120 proposes a sheet polarizer which has transparent protective layers having retardation values of up to 3 nm and provided on opposite sides of a film polarizer.

The above reference, however, gives no description as to how specifically the proposed transparent protective layers are manufatured. The sheet polarizer in the crossed nicol arrangement somewhat improves light leakage when observed from a front, but there is a disadvantage that it is difficult to prevent light leakage when observed at an angle.

JP 10 264237 A relates to a stock roll for manufacture of an optical film which has a less unevenness (variation) in a phase difference, and can manufacture an optical film being suitable for a hue compensating plate of a liquid crystal display device.

EP-A-0 591 536 relates to a phase plate which has, as a birefringent layer, a stretched and oriented film composed of a thermoplastic saturated norborene resin.

### SUMMARY OF THE INVENTION

In view of the current state of the aforestated prior art, it is an object of the present invention to provide an optical film, made of a noncrystalline thermoplastic resin, which exhibits not only a small residual phase difference but also a minimized variation of an optical axis, and also to provide a method for manufacture thereof.

It is another object of the present invention to provide an optical film which has superior optical properties and thickness precision and is obtainable by melt extrusion of a noncrystalline thermoplastic resin.

It is a further object of the present invention to provide an optical film which has a small residual phase difference when viewed along a normal direction, exhibits little dispersion of an optical axis, shows low leakage of light in the crossed nicol arrangement when observed either from a front or at an angle, and enables provision of a sheet polarizer which has excellent polarization characteristics, and also to provide a method for manufacture thereof and a sheet polarizer using the optical film.

The invention of the present application is an optical film as specified in claim 1 obtained via melt extrusion of a noncrystalline thermoplastic resin, which is characterized as having a thickness of below 100 µm, a residual phase difference of up to 10 nm, preferably up to 3 nm, and an optical axis deviation within the range of ± 10°, wherein the noncrystalline thermoplastic reisn is a saturated norbornene resin.

In particular aspects of the invention, a retardation Rs (40) and a retardation Rf (40) are rendered to fall within R(0) + 6 nm. The Rs (40) and Rf (40) respectively indicate the retardation measured along a direction slanted at an angle of 40° toward the fast axis and slow axis from a normal direction of the optical film. R(0) indicates a retardation in a normal direction.

In the invention, used as the noncrystalline thermoplastic resin is a saturated norbornene resin which is not only superior in heat resistance and transparency but low in intrinsic birefringence and photoelastic coefficient. The use of the saturated norbornene resin having such advantages results in the provision of an optical film which exhibits a low residual phase difference and a small variation of an optical axis.

In a particular aspect of the invention, a method for manufacture of an optical film according to the invention is provided. The method comprises a step of obtaining a film of a noncrystalline thermoplastic resin by extruding the noncrystalline thermoplastic resin having a glass transition temperature Tg from an extrusion die into a film and a step of making the film which is subsequently into contact with a chill roll, and the temperature of the resin just before being brought into contact with the chill roll is controlled at a temperature (Tg + 50 °C) or higher. This results in obtaining an optical film having a thickness of below 100 µm, a residual phase difference of 10 nm or lower and an optical axis deviation within the range of ± 10°.

Preferably, the temperature of the resin just before being brought into contact with the chill roll is controlled at a temperature (Tg + 80 °C) or higher. This results in obtaining an optical film with a residual phase difference of 3 nm or lower.

In a further particular aspect of the first invention, a method for manufacture of an optical film according to the first invention is provided. The method comprises a step of obtaining a film of a noncrystalline thermoplastic resin by extruding the non crystalline thermoplastic resin having a glass transition temperature Tg from an extrusion die into a film and a step of making the film which is subsequently into contact with a chill roll. Characteristically, B/A is maintained at a value of up to 10 if A is not below 70 µm but below 100 µm, at a value of up to 15 if A is not below 50 µm but below 70 µm and at a value of up to 20 if A is below 50 µm, wherein A is a thickness of the film right after being brought into contact with the chill roll and B is a lip clearance of the die. Also, the temperature of the resin just before being brought into contact with the chill roll is controlled at a temperature at (Tg + 30 °C) or higher.

In a particular aspect of the method for manufacture of an optical film in accordance with the invention, a noncrystalline thermoplastic resin is extruded from an extrusion die into a film which is subsequently brought into contact with a chill roll. On this occasion, the film is kept warm within an air gap from the die exit to the contact point of the film and the chill roll.

The optical films in accordance with the invention can be suitably used as protective films for protecting polarizers.

In a further aspect of the present invention, a sheet polarizer is provided including a polarizer and the optical film, in accordance with the invention, overlying at least one surface of the polarizer.

### BRIEF DESCRIPTION OF THE DRAWINGS

Figure 1 is a graph showing a relationship between a distance from a die exit and a film temperature in the present invention;
Figure 2 is a graph showing a relationship between a distance from a die exit and a film temperature in the present invention;
Figure 3 is a graph showing a relationship between a distance from a die exit and a temperature of a film while kept warm within the air gap in accordance with the present invention;
Figure 4 is a diagramatic sectional view showing a molten resin in the step of being processed into an optical film between a die lip and a chill roll in the manufacturing method in accordance with the present invention;
Figure 5 is a perspective view showing a retardation R(0) measured along a line normal to an optical film and a retardation Rs(40) measured along a line slanted at an angle of 40 degrees toward a fast axis direction from the normal direction of the optical film;
Figure 6 is a diagramatic sectional view showing a molten resin in the step of being processed into an optical film between a die lip and a chill roll;
Figure 7 is a perspective view showing a direction of incidence which is a direction rotated by an angle of ± 45 degrees on a plane of either one of the two sheet polarizers placed in the crossed nicol arrangement from an absorption axis of the one sheet polarizer and which is slanted at an angle of 40 degrees from a normal line;
Figure 8 is a graph showing peaks and valleys appearing on the thickness curve along the width direction in the invention; and
Figure 9 is a graph showing a thickness curve along the width direction for the optical film obtained in Comparative Example 10.

### DETAILED EXPLANATION OF THE INVENTION

The present invention is an optical film obtained via extrusion of a noncrystalline thermoplastic resin and having a thickness of below 100 µm, a residual phase difference of up to 10 nm, preferably up to 3 nm, and an optical axis deviation within the range of ± 10°, as specified in claim 1.

Optical films having residual phase differences up to 10 nm, preferably up to 3 nm, more preferably up to 1 nm, are suitably applicable for uses such as optical discs and liquid crystal displays. For example, raw films for a retardation film and protective films for a sheet polarizer, particularly for use in the manufacture of liquid crystal displays, are required having low phase differences. The optical film in accordance with the present invention, because of its very low phase difference, is particularly effective for such uses.

If an optical axis deviation of the optical film is within the range of ± 10°, the application of the optical film in accordance with the present invention for optical uses increases a proportion of non-defectives. For example, its use as a protective film for a sheet polarizer suppresses nonuniformity of display. Also, because a thickness of the optical film is below 100 µm, its use permits reduction in sizes of optical discs, liquid crystal displays and the like.

In a particular aspect of the invention, a retardation Rs(40) and a retardation Rf(40), as measured along respective lines slanted at an angle of 40° toward the fast axis and slow axis from the normal line of the optical film, are maintained not to exceed R(0) + 6 nm.

The retardation (phase difference) refers to a product of a difference between refractive indices in birefringence and a thickness, and is given by a value measured using a light at a wavelength of 590 nm according to a rotating polarizer method.

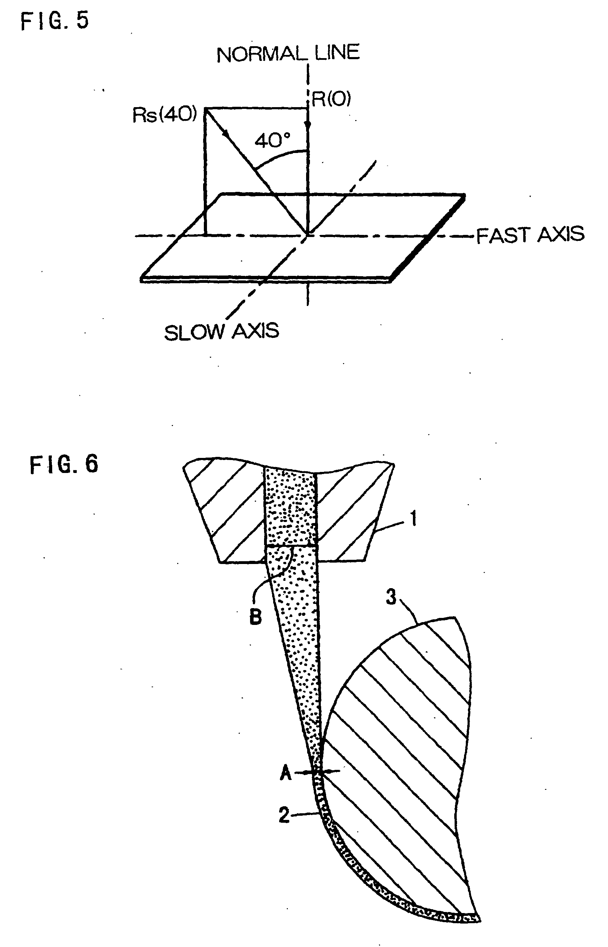

Figure 5 is a perspective view, showing a retardation R(0) as measured along a line normal to the optical film and a retardation Rs(40) as measured along a line slanted at an angle of 40 degrees toward the fast axis from the normal line of the optical film.

As shown in Figure 5, the retardation R(0) specified in the present invention is a retardation value when measured along a line normal to the optical film. The retardation Rs(40) specified in the present invention is a retardation value when measured along a line slanted at an angle of 40 degrees toward the fast axis from the normal line of the optical film.

Also, the retardation Rf(40) specified in the present invention is a retardation value when measured along a line slanted at an angle of 40 degrees toward the slow axis from the normal line of the optical film. The slow axis generally coincides with a direction corresponding to the highest refractive index in a film plane. The fast axis coincides with a direction perpendicular to the slow axis.

The optical film of the invention needs to have a retardation R(0) of up to 10 nm, preferably up to 5 nm, more preferably up to 3 nm and most preferably up to 1 nm. If the retardation R(0) exceeds 10 nm, a contrast of an LCD when viewed from its front is lowered.

The optical films of the invention preferably have a retardation Rs(40) and a retardation Rf(40) both within R(0) + 6 nm, more preferably within R(0) + 5 nm, further preferably within R(0) + 2 nm. If either or both of Rs(40) and Rf(40) exceed R(0) + 6 nm, a contrast of an LCD when viewed at an angle decreases.

The optical films of the invention are suitably used as protective films for protection of a polarizer constituting a sheet polarizer. Generally, the polarizer is easy to break when a tearing force is applied thereto and susceptible to decoloration, deformation or the like under high-humidity conditions. For the purpose of protecting the polarizer from such occurrences, a protective film is often placed thereon. However, the use of a TAC film as the protective film, as described earlier, causes problems including light leakage or other inconveniences in polarization characteristics. On the other hand, the use of the optical film having retardations Rs(40) and Rf(40) within the above-specified respective ranges in accordance with the invention effectively prevents the occurrence of light leakage or other inconveniences in polarization characteristics. A sheet polarizer fabricated using this optical film, when placed in the crossed nicol arrangement, shows lower leakage of light when observed either from a front or at an angle and exhibits excellent polarization characteristics. Because this optical film has a thickness of below 100 µm and an optical axis deviation within 10°, the use of the optical film permits reduction in size and thickness of a sheet polarizer fabricated using this optical film and an LCD using this sheet polarizer. Also, nonuniform display is maintained at a low degree of occurrrence in such an LCD. That is, the optical film of the present invention has excellent properties as described above and is suitable for use in the fabrication of a sheet polarizer.

Manufacture of the optical film in accordance with the invention is not particularly specified and can be accomplished by various methods including the following first through third methods.

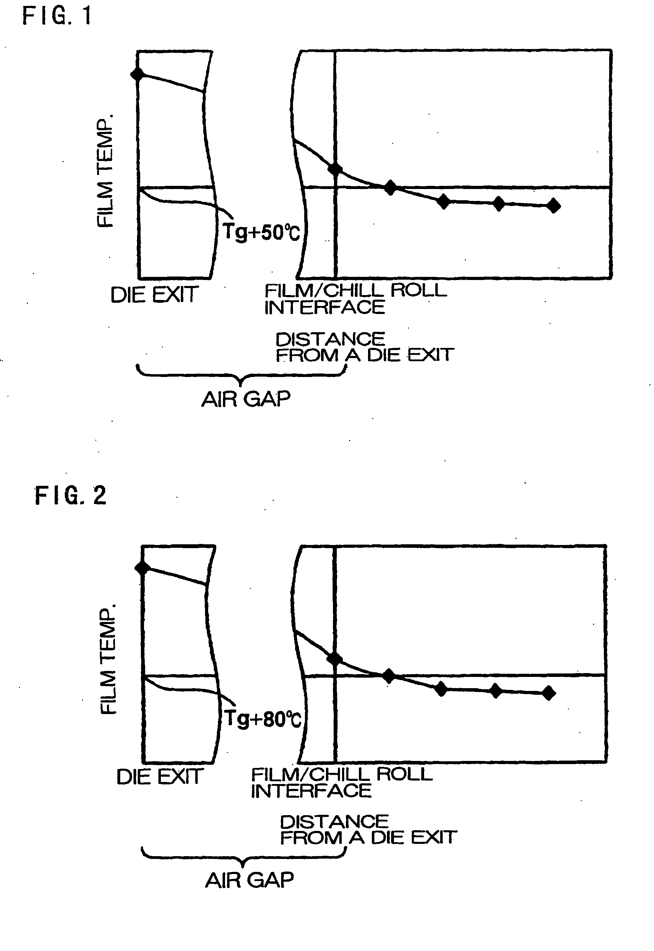

According to the first method wherein a film is extruded from a die and then brought into contact with a chill roll, a temperature of the film immediately before being brought into contact with the chill roll is controlled at a temperature of Tg + 50 °C or higher, as shown in Figure 1. Accordingly, a small stress remains in a resin if the film undergoes deformation in such a condition. As a result, a phase difference remaining in the film can be reduced to 10 nm or below.

According to the second method wherein a noncrystalline thermoplastic resin having a glass transition temperature Tg is extruded from a die into a film which is subsequently brought into close contact with a chill roll, a temperature of the film immediately before being brought into contact with the chill roll is controlled at a temperature of Tg + 80 °C or higher. Since the temperature of the film immediately before being brought into contact with the chill roll is controlled at a temperature of Tg + 80 °C or higher, as shown in Figure 2, a stress in the resin becomes very small even if the film while in such a condition undergoes deformation. Hence, the phase difference remaining in the film can be reduced to 10 nm or below, or even to 3 nm or below.

This is because the higher the temperature of a noncrystalline resin, the lower the stress produced during deformation. Accordingly, if a temperature of the resin when subjected to deformation during film formation is properly controlled, a strain produced in the resin can be reduced so that a residual phase difference is not liable to occur.

However, even if a temperature of the resin immediately before being brought into contact with the chill roll is controlled at a temperatures of Tg + 50 °C or higher or Tg + 80 °C or higher, a variation in stress depending on deformation of the resin may be produced, if a temperature variation exists across the width of the film. This may cause dispersion of a residual phase difference for some resins and the stress concentration in a specific region may cause deviation of an optical axis. It is thus desirable that the widthwise temperature variation of the film just before being brought into contact with the chill roll is maintained within 10 °C.

There are various methods by which a temperature of the film immediately before being brought into contact with the chill roll is controlled not to fall below Tg + 50 °C or Tg + 80 °C. Control of a die temperature may be considered as one applicable method. In this case, if the die temperature is raised excessively, some types of resins may be caused to deteriorate by heat. However, the selection of a suitable temperature condition that does not cause heat deterioration assures provision of an optical film which satisfies the above-specified phase difference. Shortening of an air gap is another applicable method by which a temperature of the film immediately before being brought into contact with the chill roll is controlled not to fall below Tg + 50 °C or Tg + 80 °C. In this case, the distance of the air gap may be determined with due regard to a die line and a thickness precision of the film. The distance of the air gap is not particularly specified but preferably in the approximate range of 30 - 150 mm in view of a film quality and heat insulation effectiveness.

The technique by which the widthwise temperature variation of the film just before being brought into contact with the chill roll is maintained within 10 °C is not particularly specified. Examples of such techniques include increasing a precision of a die temperature control, use of a heater having an output varied in its width direction and located within the air gap so that a resin temperature is kept uniform across the width of the film, and passing the film through an insulating box for protection thereof from outer turbulence.

In the third method for manufacture of an optical film in accordance with the first invention, a noncrystalline thermoplastic resin having a glass transition temperature Tg is extruded from an extrusion die into a film which is then brought into contact with a chill roll. If a thickness of the film right after being brought into contact with the chill roll is given by A and a lip clearance of the die is given by B, B/A is maintained at a value of up to 10 if A is not below 70 µm but below 100 µm, at a value of up to 15 if A is not below 50 µm but below 70 µm and at a value of up to 20 if A is below 50 µm. Also, the temperature of the resin just before being brought into contact with the chill roll is controlled not to fall below Tg + 30 °C.

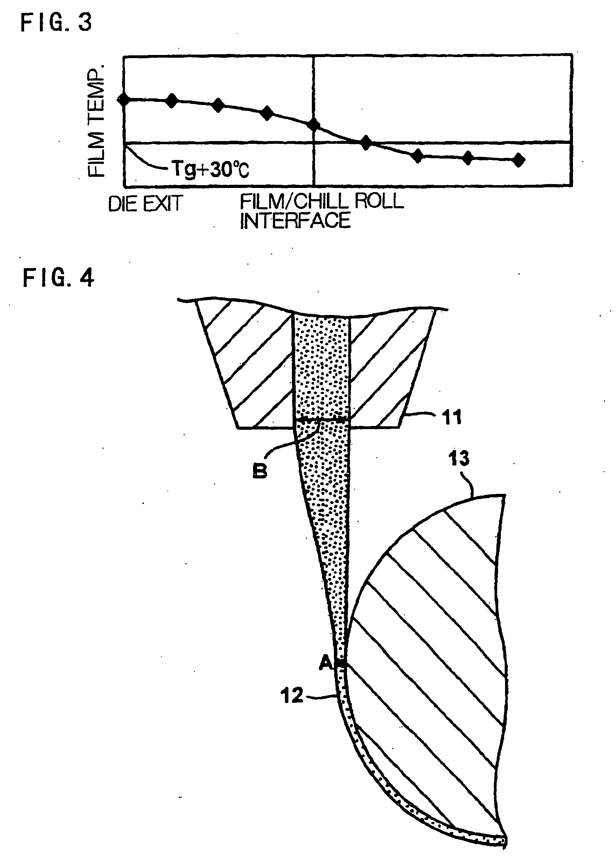

In accordance with this manufacturing method, a noncrystalline thermoplastic resin while in a molten state is extruded from a die 11 having a lip clearance B and then transferred to a chill roll 13, as shown in Figure 4. A temperature of a film 12 immediately before being brought into close contact with a peripheral surface of the chill roll 13 is controlled at a temperature of Tg + 30 °C or higher, wherein Tg is a glass transition temperature of the noncrystalline thermoplastic resin. If a thickness of the film immediately after being brought into close contact with the chill roll is given by A, B/A is set at the above-specified value. The value of B/A can be controlled to fall within the specified range by using a method wherein the lip clearance B of the die 11 is adjusted with respect to the thickness of the optical film.

When a noncrystalline thermoplastic resin having a high melt viscosity is extruded, a resin pressure applied on the lip of the die 11 occasionally becomes too high to permit adjustment of the lip clearance B to a narrower side. In such an occasion, the narrower lip clearance B is enabled by increasing a resin temperature so that a melt viscosity is lowered or decreasing an extrusion rate.

If the ratio B/A, i.e., a draw ratio, exceeds the specified range, a resin temperature may be lowered within the air gap. Then, a higher phase difference will remain in an optical film obtained via drawing of the resin.

As described above, if the ratio B/A is maintained not to exceed 20 and if a temperature of the film immediately before being brought into close contact with the chill roll is controlled not to fall below Tg + 30 °C, a lower stress is produced in the resin while passing through the air gap. This permits the provision of an optical film in which a smaller phase difference remains.

In the method for manufacture of an optical film in accordance with the invention, a noncrystalline thermoplastic resin is extruded from an extrusion die into a film which is subsequently brought into contact with a chill roll. On this occasion, the film is kept warm within an air gap from the die exit to the film/chill roll interface.

That is, the temperature control of the film just before being brought into the chill roll is achieved by keeping the film warm within the air gap. As shown in Figure 3, a temperature change of the film in this case is made smaller than in the case shown in Figure 1. The temperature control is achieved with the increased precision by this technique than by the technique in which the die temperature is varied. Accordingly, a temperature variation across the width of the film is made smaller. This technique is effective particularly when a resin which must be placed under high-precision temperature control, such as a norbornene resin, is used. Another advantage of this technique is that it can prevent deterioration of the resin that results when the die temperature is raised excessively.

The film while passing through the air gap is kept warm so that it is preferably maintained at a temperature of Tg + 30 °C or higher, more preferably Tg + 50 °C or higher, particularly preferably Tg + 80 °C or higher, further preferably Tg + 100 °C or higher. Particularly when the film is kept warm within the air gap so that it is maintained not to fall below Tg + 80 °C or Tg + 100 °C, the resulting optical film exhibits a residual phase difference of up to 3 nm or up to 1 nm.

The film can be kept warm within the air gap by placing a suitable heat source or heat insulating device, such as a heater or insulating box, along the air gap, while leaving the die or air gap condition unaltered. The length of the air gap along which the film is kept warm may be suitably chosen from a general range of 30 - 150 mm.

In a method for manufacture of an optical film in accordance with the invention, the film is preferably brought into close contact with the chill roll either by pressing the film against the chill roll or by suction from a side of the chill roll.

By forcibly bringing the film into close contact with the chill roll, contact between the film and the chill roll is stabilized at any point over an entire surface of the chill roll. As a result, deviation of an optical axis can be further reduced.

In a method for manufacture of an optical film in accordance with the invention, a molten resin from a die is forcibly brought into close contact with the chill roll. During this film formation, any device which applies a force uniformly across the width of the film can be utilized to stabilize contact between the film and the chill roll. Example of such devices include those generally used in the art, such as an air chamber, a vacuum nozzle, a static pinning and a touch roll.

In a method for manufacture of an optical film in accordance with the invention, the chill roll temperature is varied depending upon the type of the resin used, but is generally preferably maintained at a temperature within the range from a Tg of a resin to Tg - 100 °C.

The noncrystalline thermoplastic resin for use in the optical film in accordance with the present invention is a polymer which does not have a definite crystal structure and retains an amorphous form. The Tg thereof is not particularly specified as it varies depending upon the resin type but is generally 100 °C or higher.

The use of a saturated norbornene resin is required for the forgoing reason.

Examples of norbornene resins include a hydrogenated ring-opened polymer of a norbornene monomer, an addition polymer of a norbornene monomer and an olefin, a polymer made by addition of norbornene monomers with one another, and derivatives thereof. These norbornene resins may be used alone or in combination.

Specific examples of norbornene monomers include bicyclics such as norbornene and norbornadiene; tricyclics such as dicyclopentadiene and dihydroxypentadiene; tetracyclics such as tetracyclododecene; pentacyclics such as cyclopentadiene trimer; heptacyclics such as tetracyclopentadiene; the foregoing polycyclics substituted with an alkyl such as methyl, ethyl, propyl or butyl, an alkenyl such as vinyl, an alkylidene such as ethylidene, or an aryl such as phenyl, tolyl or naphthyl; the foregoing polycyclics containing an element other than carbon and hydrogen, i.e., a polar group, such as substituted with an ester, ether, cyano, hologen atom, alkoxycarbonyl, pyridyl, hydroxyl, carboxylic acid, amino, anhydrous acid, silyl, epoxy, acrylic or methacrylic group. The use of tricyclic, tetracyclic and pentacyclic norbornene monomers, among them, is preferred because they are readily available and are highly reactive to provide products excellent in heat resistance. These norbornene monomers may be used alone or in combination.

Those made by a sequence of ring-opening polymerization of the foregoing norbornene monomer by a known technique and subsequent hydrogenation of residual double bonds are widely used as the aforementioned hydrogenated, ring-opened polymer of the norbornene monomer. They may be either in the form of a homopolymer or a copolymer such as of a norbornene monomer and other cyclic olefinic monomer.

The foregoing addition polymer of a norbornene monomer and an olefin may be illustrated by a copolymer of a norbornene monomer and an α-olefin which contains 2 - 20, preferably 2 - 10 carbon atoms. Examples of such α-olefins include ethylene, propylene, 1-butene, 3-methyl-1-butene, 1-pentene, 3-methyl-1-pentene, 4-methyl-1-pentene, 1-hexene, 1-octene, 1-decene, 1-dodecene, 1-tetradecene, 1-hexadecene and the like. Among them, ethylene is preferred for its high copolymerizability. Even when the other α-olefin is copolymerized with a norbornene monomer, the presence of ethylene accelerates copolymerization thereof.

These norbornene resins are known in the art and commercially available. One specific example of a known norbornene resin is described in Japanese Patent Laid-Open Publication No. Hei 1-240517. Specific examples of commercially available norbornene resins include "ARTON" series named in trade and manufactured by JSR Corporation, "ZEONOR" series named in trade and manufactured by ZEON Corporation. and "APEL" series named in trade and manufactured by Mitsui Chemicals, Inc.

The noncrystalline thermoplastic resin for use in the present invention may further contain various additives within the respective ranges that do not interfere with accomplishment of the objects of the present invention, in order to prevent deterioration of the noncrystalline thermoplastic resin during processing and improve heat resistance, UV resistance and smoothness of the resulting optical film. Examples of such additives include phenolic, phosphorous and other antioxidants; lactone and other heat deterioration resisters; benzophenone, benzotriazol, acrylonitrile and other UV absorbers; esterified aliphatic alcohols, partially esterified or etherified polyols and other lubricants; amine and other antistatic agents; and the like. These additives, either alone or in combination, may be added.

It is required that the optical film of the present invention made via melt extrusion of the above-described noncrystalline thermoplastic resin has a thickness of below 100 µm. If the thickness of the optical film is not below 100 µm, the application of a sheet polarizer fabricated using this optical film to an LCD results in the difficulty to achieve reduction in thickness and size of the LCD.

The optical film according to the present invention has a variety of optical uses. It is suitable for use as a film for protecting a polarizer in a sheet polarizer of a liquid crystal display. In such a case, the optical film of the present invention may be placed on at least one side of the polarizer to constitute the sheet polarizer.

In the case where the optical film of the present invention is placed on one surface of a polarizer, the optical film may preferably be located on a side of a liquid crystal cell in the assembly of an LCD. This lowers leakage of light when observed both from a front and at an angle and also results in obtaining an LCD which shows a high contrast if observed either from its front or at an angle.

Also, a high-transparency resin film, other than the optical film of the present invention, may be placed on another surface of the polarizer (polarizer surface opposite to the liquid crystal cell). Examples of resins include olefin, acrylic, polyester, polycarbonate, polyamide, polysulfone, polyimide and cellulose resins. These resin films may be fabricated by a melt extrusion or solution casting technique. They may also be drawn, either uniaxially or biaxially.

Any polarizer, if in the form of a film (including a sheet) having a function of a polarizer, can be used without limitation. Examples of such polarizers include a PVA-iodine polarizer made by allowing iodine to adsorb on a polyvinyl alcohol (PVA) resin film and then uniaxially drawing the film in a boric acid bath, a PVA-dye polarizer made by allowing a highly dichroic direct dye to diffusively adsorb on a PVA film an then uniaxially drawing the film, and oriented polyene polarizers such as an uniaxially oriented and dehydrated PVA and a dehydrochlorinated polyvinyl chloride resin.

The aforementioned PVA may be prepared by saponifying a polyvinyl acetate resin made via polymerization of vinyl acetate alone or by saponifying a copolymer made as a result of copolymerization of vinyl acetate with a small amount of a copolymerizable component such as unsaturated carboxylic acids (including salts, esters, amides, nitriles and the like), olefins, vinyl ethers and unsaturated sulfonates.

The technique used to laminate the optical film of the present invention with a polarizer is not particularly specified. A typical example thereof is wet lamination.

When a dry thickness and smooth application of an adhesive is taken into consideration, the wet lamination may be achieved, for example, by diluting the adhesive with water to a suitable concentration (e.g., 0.01 - 50 weight %) to prepare a coating fluid, dripping or applying the coating fluid to the optical film by means of a known coater (e.g., gravure coater, microgracure coater or the like), laminating the optical film with a polarizer while squeezing excess coating fluid by a pair of rolls, and drying the laminate as by a hot air to bond them.

The adhesive is not particularly specified in type, so long as it is an adhesive or pressure-sensitive adhesive which shows transparency after drying. For example, the use of urethane and PVA adhesives is preferred for their ability to exhibit high adhesive performances and durablity.

Also, the optical film prior to its lamination with the polarizer may preferably be subjected to a generally-used surface treatment, such as a corona discharge treatment or an ultraviolet exposure treatment of an adhesive surface of the optical film, for the purpose of further improving adhesive strength of the film.

Since the sheet polarizer of the present invention has the optical film of the present invention placed on at least one surface of a polarizer, the sheet polarizer when placed in the crossed nicol arrangement shows low leakage of light if observed either from a front or at an angle, exhibits excellent polarization characteristics and avoids nonuniform display. Also, the sheet polarizer is suitable for use in the fabrication of an LCD since it permits reduction in size and thickness of the LCD.

### DESCRIPTION OF THE PREFERRED EXAMPLES

The optical film in accordance with the present invention is described with reference to Examples which follow to clarify the present invention.

### EXAMPLES 1 - 9 AND COMPARATIVE EXAMPLES 1 AND 2

The retardation and optical axis deviation are hereinafter given by values measured using an automatic birefringence analyzer "KOBRA-21ADH" (name used in trade and manufactured by Oji Scientific Instruments) with a radiation at a wavelength of 590 nm. Specifically, the retardation was determined by cutting and removing opposite widthwise end portions of a film that respectively extend 10 % of a full width of the film, measuring retardation from all points arranged widthwise on the film at intervals of 50 mm and from three points arranged in a flow direction at intervals of 1 m, and calculating an arithmetic mean of the measured values. The optical axis deviation is indicated by an angle with the highest absolute value among angles between orientation angle of the film and its flow direction.
(1) Resins used: a saturated norbornene resin (product of ZEON Corporation., product name "ZEONOR 1600", Tg = 168 °c) and a polysulfone resin (product of Teijin-Amoco Eng. Plastics Inc., product name "Udel", Tg = 193 °C), both predried
(2) Extruder: a single screw extruder with an internal diameter of 50 mm, L/D = 28, and a temperature adjusted within the range of 270 - 320 °C
(3) T-die: a 500 mm wide, coathanger type T-die
(4) Chill roll: a chill roll equipped with an air chamber and maintained at a temperature of 140 °C

In the following Examples and Comparative Examples, the above-listed devices were employed to manufacture 430 mm wide and 40 µm thick films.

### EXAMPLE 1

Extrusion was perfomred using the saturated norbornene resin, at a die temperature of 220 °C and an air gap of 80 mm. A temperature of the film immediately before its contact with the chill roll was found to be 310 °C from measurement using a radiation thermometer. The resulting film was determined to have a residual phase difference of 9.50 nm, on average, and an optical axis deviation of 7°.

### EXAMPLE 2

Extrusion was performed using the saturated norbornene resin, at a die temperature of 310 °C and an air gap of 70 mm. A temperature of the film immediately before its contact with the chill roll was found to be 250 °C. The resulting film was determined to have a residual phase difference of 2.75 nm, on average, and an optical axis deviation of 7°.

### EXAMPLE 3

Extrusion was performed using the saturated norbornene resin, at a die temperature of 290 °C and an air gap of 80 mm. The film while passing through the air gap was kept warm by a heater located along the air gap and spaced from the film by a distance of 30 mm. A temperature of the film immediately before its contact with the chill roll was found to be 232 °C. The resulting film was determined to have a residual phase difference of 9.00 nm, on average, and an optical axis deviation of 7°.

### EXAMPLE 4

Extrusion was performed using the saturated norbornene resin, at a die temperature of 290 °C and an air gap of 70 mm. The film while passing through the air gap was kept warm by a heater located along the air gap and spaced from the film by a distance of 30 mm. A temperature of the film immediately before its contact with the chill roll was found to be 258 °C. The resulting film was determined to have a residual phase difference of 2.50 nm, on average, and an optical axis deviation of 7°.

### EXAMPLE 5 (Reference)

Extrusion was performed using the polysulfone resin, at a die temperature of 310 °C and an air gap of 80 mm. The film while passing through the air gap was kept warm by a heater located along the air gap and spaced from the film by a distance of 30 mm. A temperature of the film immediately before its contact with the chill roll was found to be 250 °C. The resulting film was determined to have a residual phase difference of 8.90 nm, on average, and an optical axis deviation of 7°.

### EXAMPLE 6 (Reference)

Extrusion was performed using the polysulfone resin, at a die temperature of 320 °C and an air gap of 70 mm. The film while passing through the air gap was kept warm by a heater located along the air gap and spaced from the film by a distance of 30 mm. A temperature of the film immediately before its contact with the chill roll was found to be 278 °C. The resulting film was determined to have a residual phase difference of 2.90 nm, on average, and an optical axis deviation of 7°.

### EXAMPLE 7

The procedure of Example 1 was followed, except that a lip clearance was set at 500 µm and a target thickness of the film after its contact with the chill roll was set at 50 µm (draw ratio B/A = 10), to obtain a film. The resulting film was determined to have a residual phase difference of 5.20 nm, on average, and an optical axis deviation of 4°. During this process, a temperature of the film immediately before its contact with the chill roll was found to be 212 °C.

### EXAMPLE 8

The procedure of Example 1 was followed, except that a lip clearance was set at 500 µm and a target thickness of the film after its contact with the chill roll was set at 30 µm (draw ratio B/A = 17), to obtain a film. The resulting film was determined to have a residual phase difference of 8.80 nm, on average, and an optical axis deviation of 3°. During this process, a temperature of the film immediately before its contact with the chill roll was found to be 203 °C.

### EXAMPLE 9 (Reference)

The procedure of Example 1 was followed, except that the resin used in Example 5 was used, a lip clearance was set at 500 µm and a target thickness of the film after its contact with the chill roll was set at 50 µm (draw ratio B/A = 10), to obtain a film. The resulting film was determined to have a residual phase difference of 6.00 nm, on average, and an optical axis deviation of 5°. During this process, a temperature of the film immediately before its contact with the chill roll was found to be 235 °C.

### COMPARATIVE EXAMPLE 1

Extrusion was performed using the resin used in Example 1, at a die temperature of 290 °C and an air gap of 80 mm. A temperature of the film immediately before its contact with the chill roll was found to be 207 °C. The resulting film was determined to have a residual phase difference of 12.10 nm, on average, and an optical axis deviation of 7°.

### COMPARATIVE EXAMPLE 2

The procedure of Example 1 was followed, except that the resin used in Example 1 was used, a lip clearance was set at 1,000 µm and a target thickness of the film after its contact with the chill roll was set at 50 µm (draw ratio B/A = 20), to obtain a film. The resulting film was determined to have a residual phase difference of 11.60 nm, on average, and an optical axis deviation of 3°. During this process, a temperature of the film immediately before its contact with the chill roll was found to be 195 °C. **EXAMPLES 10 - 15 AND COMPARATIVE EXAMPLE 3 - 6**
1. Noncrystalline thermoplastic resins and film used
   (1) Norbornene resin "ZEONOR 1600" (name used in trade and manufactured by ZEON Corporation.) having a Tg = 168 °C
   (2) Norbornene resin "ARTON G62" (name used in trade and manufactured by JSR Corporation) having a Tg = 173 °C
   (3) Olefin-N-alkyl maleimide resin "TI-160α" (name used in trade and manufactured by Tosoh Corp.) having a Tg = 140 °C
   (4) TAC cast film "FUJI TAC CLEAR" (name used in trade and manufactured by Fuji Photo Film Co., Ltd.) having a thickness of 80 µm
2. Melt extruding unit used
   (1) Extruder: a single screw extruder with an internal diameter of 50 mm, L/D = 28, and a die temperature adjusted within the range of 285 - 320 °C
   (2) T-die: a 500 mm wide, coathanger type T-die
   (3) Air gap: an air gap adjusted within the range of 70 - 85 mm
   (4) Chill roll: a chill roll equipped with an air chamber and maintained at a temperature of 140 °C

### EXAMPLE 10

The norbornene resin "ZEONOR 1600" was used as the noncrystalline thermoplastic resin. This norbornene resin was melt extruded from the T-die of the above-specified melt extruding unit, at a die temperature of 310 °C, a T-die lip clearance of 800 µm, an air gap of 80 mm, a film temperature of Tg + 55 **°**C just before its contact with the chill roll and a film thickness of 50 µm just after its close contact with the chill roll, and then taken up by the chill roll to prepare a 50 µm thick and 430 mm wide optical film.

### EXAMPLE 11

The norbornene resin "ARTON G62" was used as the noncrystalline thermoplastic resin. The die temperature, T-die lip clearance and air gap were maintained at 320 °C, 800 µm and 70 mm, respectively. A temperature of the film just before its contact with the chill roll was also maintained at Tg + 60 °C. Otherwise, the procedure of Example 10 was followed to prepare a 50 µm thick and 430 mm wide optical film.

### EXAMPLE 12

The die temperature, T-die lip clearance and air gap were maintained at 315 °C, 800 µm and 80 mm, respectively. The film while passing through the air gap was kept warm by a heater located along the air gap and spaced from the film by a distance of 30 mm, so that a temperature of the film just before its contact with the chill roll was maintained at Tg + 110 °C. Otherwise, the procedure of Example 11 was followed to prepare a 50 µm thick and 430 mm wide optical film.

### EXAMPLE 13

The T-die lip clearance was maintained at 500 µm. A temperature of the film just before its contact with the chill roll was maintained at Tg + 78 °C. Otherwise, the procedure of Example 11 was followed to prepare a 50 µm thick and 430 mm wide optical film.

### EXAMPLE 14

The T-die lip clearance was maintained at 500 µm. A temperature of the film just before its contact with the chill roll was maintained at Tg + 60 °C. A thickness of the film just after its close contact with the chill roll was maintained at 40 µm. Otherwise, the procedure of Example 11 was followed to prepare a 40 µm thick and 430 mm wide optical film.

### EXAMPLE 15 (Reference)

The olefin-N-alkyl maleimide resin "TI-160α" was used as the noncrystalline thermoplastic resin. A temperature of the film just before its contact with the chill roll was maintained at Tg + 88 °C. Otherwise, the procedure of Example 10 was followed to prepare a 50 µm thick and 430 mm wide optical film.

### COMPARATIVE EXAMPLE 3

The TAC cast film "FUJI TAC CLEAR" was used without any modification.

### COMPARATIVE EXAMPLE 4

The norbornene resin ARTON G62" was dissolved in toluene to prepare a norbornene resin solution having a resin content of 35 weight %. Next, this norbornene resin solution was cast onto a smooth surface of a polyethylene terephthalate (PET) film (125 µm thick), dried at 80 °C for a period of 5 minutes and then separated from the PET film. This separated norbornene resin film was then subjected to a three-stage drying on the cast film line at the following schedule: 100 °C for 5 minutes, 130 °C for 5 minutes, and finally 160 °C for 5 minutes. As a result, a cast film was prepared having a dry thickness of 50 µm.

### COMPARATIVE EXAMPLE 5

The die temperature and air gap were maintained at 285 °C and 85 mm, respectively. A temperature of the film just before its contact with the chill roll was maintained at Tg + 42 °C. Otherwise, the procedure of Example 11 was followed to prepare a 50 µm thick and 430 mm wide optical film.

### COMPARATIVE EXAMPLE 6

The T-die lip clearance was maintained at 1,000 µm. A temperature of the film just before its contact with the chill roll was maintained at Tg + 35 °C. Otherwise, the procedure of Example 11 was followed to prepare a 50 µm thick and 430 mm wide optical film.

The films obtained in Examples 10 - 15 and Comparative Examples 3 - 6 were measured for retardation and optical axis deviation in accordance with the following method. The results are listed in Table 1.

### (Measurement methods of retardation and optical axis deviation)

The automatic birefringence analyzer "KOBRA-21ADH" (name used in trade and manufactured by Oji Scientific Instruments ), together with a radiation at a wavelength of 590 nm, were used to determine a retardation R(0) along the line normal to the film, a retardation Rs(40) along the line slanted at an angle of 40 degrees from the normal line of the film toward the fast axis, a retardation Rf(40) along the line slanted at an angle of 40 degrees from the normal line of the film toward the slow axis and an optical axis deviation. Prior to the measurement of the retardation, the opposite widthwise end portions of the film, each extending 10 % of the width of the film, were cut out from the film. The retardation was measured for the remaining film portion from all points arranged widthwise at intervals of 50 mm and from three points arranged lengthwise (in a flow direction) at intervals of 1 m. An arithmetic mean of the measured values was calculated to give a value for each of R(0), Rs(40) and Rf(40). The optical axis deviation was determined in the same manner as in Example 1.

The following procedure was utilized to fabricate a sheet polarizer from each of the above-obtained films.

### (Preparation of polarizer)

A unoriented film (75 µm thick) of PVA (99 mole % saponified) was washed with room temperature water and then subjected to five-fold stretching in an axial direction (lengthwise direction). The film while in the stretched state was immersed in an aqueous solution containing, by weight, 0.5 % of iodine and 5 % of potassium iodide and then subjected to a 5-minute crosslinking treatment in a 35 °C aqueous solution containing, by weight, 10 % of boric acid and 10 % of potassium iodide. As a result, a polarizer was prepared.

### (Preparation of Sheet Polarizer)

Each of the above-obtained films was corona treated at its one surface to be stacked to the polarizer. The corona-treated surface of the film exhibited a contact angle with water of 42 - 44 degrees. A mixture of A and B components, containing A and B by 10 : 3 (weight ratio), of a two-component, aqueous urethane adhesive "EL-436A/B" (name used in trade and manufactured by Toyo Morton Co., Ltd.) was diluted with water so that a solid content is 10 weight % whereby an adhesive solution was prepared. Next, the adhesive solution was coated, using a mayer bar #8, onto the corona-treated surface of each film which was subsequently adhered to one surface of the polarizer. The same procedure was performed to adhere each film to the other surface of the polarizer, so that each film was placed on each surface of the polarizer. This laminate was placed in a constant temperature oven at 45 °C for a period of 72 hours, dried and then aged to prepare a sheet polarizer.

The sheet polarizers obtained in the way as described above were evaluated for light leakage according to the following procedure.

### (Evaluation of light leakage)

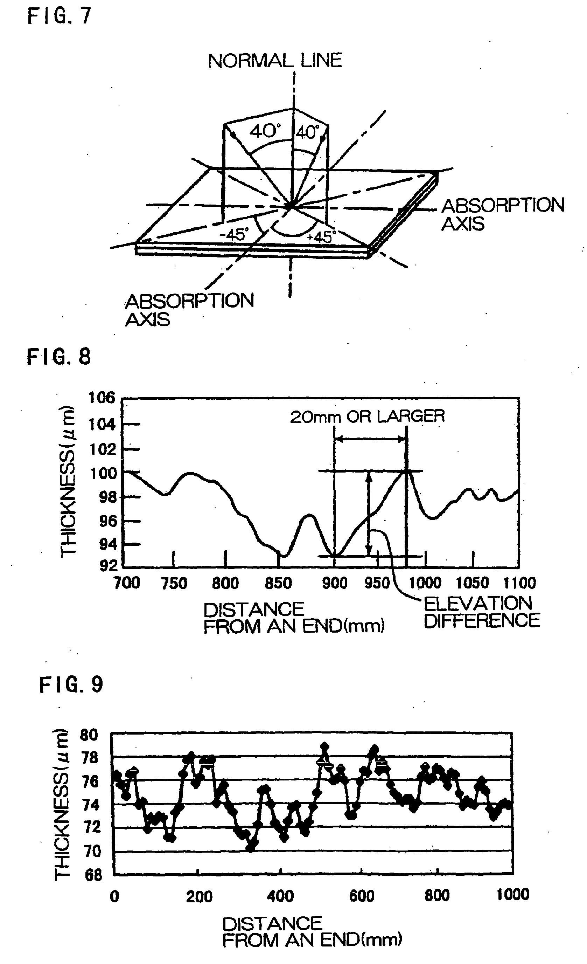

Figure 7 is a perspective view showing the directions of incidence that are rotated on respective planes of two sheet polarizers arranged in the crossed nicol manner by angles of ± 45 degrees from an absorption axis of one of those polarizers and are slanted at an angle of 40 degrees from a normal line. As shown in Figure 7, a degree of light leakage was evaluated from visual observation made along the two directions that are rotated on respective planes of two sheet polarizers arranged in the crossed nicol manner by angles of ± 45 degrees from an absorption axis of one of those polarizers and are slanted at an angle of 40 degrees from a normal line.

**Table 1**

| | | | | | | | | | | | | | | | |
|---|---|---|---|---|---|---|---|---|---|---|---|---|---|---|---|
| | | Non- crystalline Thermoplastic Resin or Film | Die Temp. (°C) | Air Gap (mm) | Film Temp. just before contact with A Chill Roll (°C) | B/A | Remarks | Film Thick- ness (µm) | R (0) (nm) | Rs (40) (nm) | Rf (40) (nm) | Optical Axis Deviation (°) | Light Leakage from A Sheet Polarizer | | |
| | | | | | | | | | | | | | 0° | +45° | -45° |
| Ex. (Ref.) | 10 | ZEONOR 1600 | 310 | 80 | Tg+55 | 16 | | 50 | 6.7 | 8.7 | 4.4 | 7 | Very Low | Low | Low |
| | 11 | ARTON G62 | 320 | 70 | Tg+60 | 16 | | 50 | 7.3 | 8.9 | 4.7 | 7 | Very Low | Low | Low |
| | 12 | ARTON G62 | 315 | 80 | Tg+110 | 16 | Kept Warm by A Heater | 50 | 1.8 | 4.6 | 2.6 | 9 | Very Low | Low | Low |
| | 13 | ARTON G62 | 320 | 70 | Tg+78 | 10 | | 50 | 3.4 | 5.9 | 1.8 | 8 | Very Low | Low | Low |
| | 14 | ARTON G62 | 320 | 70 | Tg+60 | 12.5 | | 40 | 6.1 | 8.2 | 4.0 | 8 | Very Low | Low | Low |
| | 15 | TI-160α | 310 | 80 | Tg+88 | 16 | | 50 | 7.3 | 9.1 | 4.8 | 7 | Very Low | Low | Low |
| Comp. Ex. | 3 | TAC Cast Film | - | - | - | - | Casting Method | 80 | 4.8 | 16.0 | 4.2 | 5 | Low | High | High |
| | 4 | ARTON G62 | - | - | - | - | Casting Method | 50 | 13.0 | 22.0 | 4.3 | 9 | High | High | High |
| | 5 | ARTON G62 | 285 | 85 | Tg+42 | 16 | | 50 | 11.0 | 19.0 | 3.0 | 12 | High | High | High |
| | 6 | ARTON G62 | 320 | 70 | Tg+35 | 12 | | 50 | 15.2 | 24.0 | 4.9 | 8 | High | High | High |

As apparent from Table 1, the sheet polarizers made using the optical films of Examples 10 - 15, in accordance with the present invention, all exhibit low levels of light leakage in the crossed nicol arrangement, if observed either from a front or at an angle, and thus show excellent polarization characteristics.

In contrast, the sheet polarizer made using the TAC cast film of Comparative Example 3 exhibits the level of light leakage that is low when observed from a front but is high when observed at an angle, and thus shows the poorer polarization characteristics. Observation either from the front or at an angle reveals high levels of light leakage and thus poor polarization characteristics for all of the sheet polarizers made using the optical film of Comparative Example 4 that was obtained via a cast film process, the optical film of Comparative Example 5 that exhibits R(0) of exceeding 10 nm and an optical axis deviation outside the range of ± 10° and the optical film of Comparative example 6 that exhibits R(0) of exceeding 10 nm.

### EXAMPLES 16 AND 17 AND COMPARATIVE EXAMPLES 7 AND 8

The following manufacturing unit was used.
(1) Extruder: a single screw extruder with an internal diameter of 50 mm, L/D = 28, and a temperature adjusted within the range of 270 - 320 °C
(2) Die: a 500 mm wide, coathanger type T-die
(3) Chill roll: a chill roll equipped with an edge pinning and maintained at a temperature of 140 °C

In the following Examples and Comparative Examples, the above-listed devices were employed to manufacture 430 mm wide and 40 µm thick films which were subsequently measured for residual phase difference in the same manner as in Example 1.

### EXAMPLE 16

The saturated norbornene resin "ZEONOR 1600" (name used in trade and manufactured by ZEON Corporation., Tg = 168 °C) was used as the noncrystalline thermoplastic resin. This norbornene resin was predried and extruded from the die, at a die temperature of 300 °C and an air gap of 70 mm. The film while passing through the air gap was kept warm by a 400 mm wide heater located along the air gap and spaced from the film by a distance of 30 mm. A temperature range of the resin along its width direction immediately after it passed a die exit was found to be 298 - 303 °C. A temperature range of the film along its width direction immediately before its contact with the chill roll was found to be 270 - 274 °C. Accordingly, a temperature variation of the film along its width direction, both immediately after it passes the die exit and immediately before it is brought into contact with the chill roll, was maintained within 10 °C. This film temperature was measured using a radiation thermometer.

The resulting film was determined to have an average residual phase difference of 0.85 nm (with a maximum of 0.90 nm).

### EXAMPLE 17 (Reference)

The polysulfone resin "Udel 3500" (name used in trade and manufactured by Teijin-Amoco Eng. Plastics Inc., Tg = 193 °C) was used as the noncrystalline thermoplastic resin. The die temperature was maintained at 325 °C. Otherwise, the procedure of Example 16 was followed to extrude the resin. A temperature range of the resin along its width direction immediately after it passed a die exit was found to be 331 - 334 °C. A temperature range of the film along its width direction immediately before its contact with the chill roll was found to be 300 - 306 °C.

The resulting film was determined to have an average residual phase difference of 0.89 nm (with a maximum of 0.95 nm).

### COMPARATIVE EXAMPLE 7

The die temperature was maintained at 280 °C. Otherwise, the procedure of Example 16 was followed to extrude the resin. A temperature range of the resin along its width direction immediately after it passed a die exit was found to be 285 - 291 °C. A temperature range of the film along its width direction immediately before its contact with the chill roll was found to be 258 - 265 °C.

The resulting film was determined to have an average residual phase difference of 2.05 nm.

### COMPARATIVE EXAMPLE 8

The resin used in Example 17 was used. Otherwise, the procedure of Example 16 was followed to extrude the resin. The die temperature was intentionally varied so that a temperature range of the resin along its width direction immediately after it passed a die exit measured 303 - 321 °C. A temperature range of the film along its width direction immediately before its contact with the chill roll was found to be 270 - 281 °C.

The resulting film was determined to have an average residual phase difference of 0.91 nm with a maximum of exceeding 1 nm.

### EXAMPLES 18 AND 19 AND COMPARATIVE EXAMPLES 9 AND 10

A system including the following extruder, T-die and chill roll was employed to manufacture optical films.
(1) Extruder: a single screw extruder with an internal diameter of 100 mm, L/D = 32 and an extrusion temperature adjusted within the range of 270 - 320 °C
(2) T-die: a 1,700 mm wide, coathanger type T-die with a lip clearance of 800 µm
(3) Chill roll: a chill roll equipped with opposite static pinnings and maintained at a temperature of 140 °C

### EXAMPLE 18

The thermoplastic norbornene resin "ZEONOR 1600" (name used in trade and manufactured by ZEON Corporation., Tg = 168 °C) was predried at 110 °C for a duration of 3 hours. Such-predried thermoplastic norbornene resin was extruded at a die temperature of 310 °C and an air gap of 70 mm and then cooled with the chill roll to provide an optical film. A temperature of the film just before its contact with the chill roll measured 250 °C. As a result, an optical clear film was obtained having a width of 1,500 mm and a thickness of 40 µm. Opposite widthwise ends of the film were removed to provide a 1,200 mm wide film which was subsequently evaluated for residual phase difference, optical axis deviation and thickness precision according to the following procedure. Further evaluation of the optical film was made by an adhesion test in which the optical film was adhered to a polarizer according to the below-described procedure.

### (a) Retardation along a normal line, optical axis deviation and thickness precision

The automatic birefringence analyzer "KOBRA-21ADH" (name used in trade and manufactured by Oji Scientific Instruments Ltd.), together with a radiation at a wavelength of 590 nm, were used for measurement. Prior to the measurement of the retardation along the normal line, optical axis deviation and thickness precision, the opposite widthwise end portions of the film, each extending 10 % of the width of the film, were removed. Retardation was measured from points arranged widthwise at a regular interval of 5 mm. The optical axis deviation is indicated on the basis that the optical axis is in the mean direction of 0°. Thickness measurement was carried out using a contact type thickness gauge MILITRON (name used in trade and manufactured by Mahr) with an R30 mm ultra-hard spherical measuring element, at a measurement pressure of 0.2 N.

### (b) Adhesion test

An adhesive surface of each optical film was corona treated. A 10:3 mixture of a base resin and a curing agent of an aqueous urethane adhesive (product of Toyo Morton, product number: EL-436) was diluted with water to a solid content of 10 weight % and then coated onto the adhesive surface of the film using a mayer bar #8. The adhesive coated film was subsequently combined with a polarizer. The result of combination was visually observed.

The optical film obtained in Example 18 exhibits a maximum retardation value along the normal line of 2.8 nm, an optical axis deviation of 9° and a thickness precision of 5.3 µm. A difference in elevation between a peak and a neighboring valley was 3.8 µm, at maximum. A thickness precision per 2 cm width was 2.41 µm, at maximum.

In the above adhesion test, it was confirmed that the optical film was held in close contact with the polarizer, without failure, over a full width thereof.

### EXAMPLE 19 (Reference)

The polysulfone resin "UDEL 3500" (name used in trade and manufactured by Teijin-Amoco Eng. Plastics Inc., Tg = 193 °c) was predried at 110 °C for a duration of 3 hours. Such-predried resin was extruded from the extruder at a die temperature of 320 °C and an air gap of 70 mm and then cooled with the chill roll to obtain an optical film. A temperature of the film just before its contact with the chill roll measured 278 °C. This resulted in obtaining an optical film having a width of 1,500 mm and a thickness of 80 µm. Opposite widthwise end portions of the film, each extending 10 % of the width of the film, were removed to provide a 1,200 mm wide optical film which was subsequently evaluated in the same manner as in Example 18.

As a result, the optical film exhibited a retardation along the normal line of 2.90 nm, on average, an optical axis deviation within the range of 7°, and a thickness precision of 7.5 µm. A difference in elevation between a peak and a neighboring valley was 4.8 µm, at maximum. A thickness precision per 2 cm width was 2.9 µm, at maximum.

In the adhesion test, it was confirmed that the optical film was held in close contact with the polarizer, without failure, over a full width thereof.

### COMPARATIVE EXAMPLE 9

Extrusion was performed using the resin used in Example 18, at a die temperature of 310 °C and an air gap of 70 mm. The die temperature was intentionally varied along the widthwise direction to provide an about 40 µm thick film with a poor thickness precision. A temperature of the film immediately before its contact with the chill roll measured 250 °C.

The thus-obtained film was evaluated in the same manner as in Example 18. The optical film exhibited a retardation along the normal line of 2.8 nm, on average, an optical axis deviation of 19° and a thickness precision of 6.9 µm. A difference in elevation between a peak and a neighboring valley was 5.2 µm, at maximum. A thickness precision per 2 cm width was 4 µm, at maximum.

In the adhesion test, the optical film were observed to be partly out of close contact with the polarizer where the elevation difference is large.

### COMPARATIVE EXAMPLE 10

A commercially available norbornene resin extruded film (product of ZEON Corporation., product number: ZF-16-75, lot: 0069) was evaluated in the same manner as in Example 18. The film exhibited a retardation along the normal line of 3.2 nm and an optical axis deviation of 34°. The results of thickness measurement were shown in Figure 9. That is, the film measured a mean thickness of 75 µm with a thickness precision of 8.55 µm. A difference in elevation between a peak and a neighboring valley was 7.0 µm, at maximum. A thickness precision per 2 cm width was 4.33 µm, at maximum.

The adhesion test was conducted in the same manner as in Example 18. As a result of the test, the optical film were observed to be partly out of close contact with the polarizer where the elevation difference is large.

## Claims

1. An optical film made via melt extrusion using a noncrystalline thermoplastic resin, said optical film having a thickness of below 100 µm, **characterized in that**
a residual phase difference, that corresponds to the retardation R(O) as measured along a line normal to the optical film, is up to 10 nm;
an optical axis deviation is within ± 10°, wherein the optical axis deviation is indicated by an angle with the highest absolute value among angles between orientation angle of the film and its flow direction; and
said noncrystalline thermoplastic resin is a saturated norbornene resin.

2. The optical film as recited in claim 1, wherein said residual phase difference is up to 3 nm.

3. The optical film as recited in claim 1, wherein a retardation Rs(40) and a retardation Rf(40), which are measured along respective lines slanted at an angle of 40° from a normal line of said optical film toward a fast axis and a slow axis, are respectively maintained not to exceed R(0) + 6 nm.

4. A method for manufacture of the optical film as specified in any one of claims 1-3, including the steps of extruding a noncrystalline thermoplastic resin having a glass transition temperature Tg from an extrusion die into a film and bringing the film into close contact with a chill roll, a temperature of said film just before its contact with the chill roll being maintained at a temperature Tg + 50°C or higher.

5. The method for manufacture of an optical film as recited in claim 4, wherein a temperature of said film just before its contact with the chill roll is maintained at a temperature Tg + 80°C or higher thereby obtaining an optical film having a residual phase difference of up to 3 nm.

6. The method for manufacture of an optical film as recited in any one of claims 4-5, wherein said film is brought into close contact with the chill roll either by pressing the film against the chill roll or by suction from a side of the chill roll.

7. The method for manufacture of an optical film as recited in any one of claims 4-6, wherein, when said noncrystalline thermoplastic resin is extruded from the extrusion die into the film which is subsequently brought into close contact with the chill roll, the film is kept warm within an air gap extending from the die exit to the film/chill roll interface.

8. The optical film as recited in any one of claims 1-3, wherein said film is a film for protecting a polarizer.

9. A sheet polarizer including a polarizer and the optical film as recited in any one of claims 1-3 which is placed on at least one surface of said polarizer.

## Patentansprüche

1. Optische Folie, die durch Schmelzextrudierung unter Verwendung eines nicht-kristallinen thermoplastischen Harzes hergestellt ist, wobei die optische Folie eine Dicke von unterhalb 100 µm aufweist, **dadurch gekennzeichnet, dass**
eine Restphasendifferenz, die der Retardation R(O), gemessen entlang einer zu der optischen Folie senkrechten Linie, entspricht, bis zu 10 nm beträgt;
eine Abweichung der optischen Achse innerhalb von ± 10° Grad liegt, worin die Abweichung der optischen Achse durch einen Winkel mit dem höchsten absoluten Wert unter Winkeln zwischen dem Orientierungswinkel der Folie und deren Fließrichtung angegeben ist; und wobei das nicht-kristalline thermoplastische Harz ein gesättigtes Norbornen-Harz ist.

2. Optische Folie nach Anspruch 1, worin die Restphasendifferenz bis zu 3 nm beträgt.

3. Optische Folie nach Anspruch 1, worin eine Retardation Rs(40) sowie eine Retardation Rf(40), die gemessen werden entlang der jeweiligen Linien, die mit einem Winkel von 40° Grad von der Senkrechten der optischen Folie in Richtung einer schnellen Achse und einer langsamen Achse geneigt sind, jeweils derartig gehalten werden, dass sie R(O) + 6 nm nicht überschreiten.

4. Verfahren zur Herstellung der in einem der Ansprüche 1 - 3 definierten optischen Folie, einschließlich der Schritte der Extrudierung eines nicht-kristallinen thermoplastischen Harzes mit einer Glasübergangstemperatur Tg aus einer Extrusionsdüse in eine Folie und des Inkontaktbringens der Folie mit einer Kühlwalze, wobei die Temperatur der Folie direkt vor deren Kontakt mit der Kühlwalze bei einer Temperatur von Tg + 50° C oder mehr gehalten wird.

5. Verfahren zur Herstellung einer optischen Folie nach Anspruch 4, worin die Temperatur der Folie direkt vor deren Kontakt mit der Kühlwalze bei einer Temperatur von Tg + 80° C oder mehr gehalten wird, wodurch eine optische Folie mit einer Restphasendifferenz von bis zu 3 nm erhalten wird.

6. Verfahren zur Herstellung einer optischen Folie nach einem der Ansprüche 4 - 5, worin die Folie mit der Kühlwalze entweder durch Aufdrücken der Folie gegen die Kühlwalze oder durch Ansaugen von der Seite der Kühlwalze in engen Kontakt gebracht wird.

7. Verfahren zur Herstellung einer optischen Folie nach einem der Ansprüche 4 - 6, worin, wenn das nicht-kristalline thermoplastische Harz aus der Extrusionsdüse in die Folie, die anschließend mit der Kühlwalze in engen Kontakt gebracht wird, extrudiert wird, die Folie innerhalb eines Luftspalts, der sich von dem Düsenaustritt bis zu der Folien/Kühlwalzen-Grenzfläche erstreckt, warmgehalten wird.

8. Optische Folie nach einem der Ansprüche 1 - 3, worin die Folie eine Folie zum Schutz eines Polarisators ist.

9. Blattpolarisator, welcher einen Polarisator und die optische Folie nach einem der Ansprüche 1 - 3 umfasst, die auf mindestens eine Oberfläche des Polarisators aufgetragen ist.

## Revendications

1. Film optique fabriqué par extrusion fondue en utilisant une résine thermoplastique non cristalline, ledit film optique ayant une épaisseur inférieure à 100 µm, **caractérisé en ce que**
une différence de phase résiduelle, qui correspond au retard R(0) mesuré le long d'une ligne normale au film optique, est jusqu'à 10 nm,
une déviation d'axe optique est à ±10°, dans lequel la déviation d'axe optique est indiquée par un angle avec la plus grande valeur absolue parmi les angles entre l'angle d'orientation du film et sa direction de flux ; et
ladite résine thermoplastique non cristalline est une résine de norbornène saturée.

2. Film optique selon la revendication 1, dans lequel ladite différence de phase résiduelle est jusqu'à 3 nm.

3. Film optique selon la revendication 1, dans lequel un retard Rs(40) et un retard Rf(40), qui sont mesurés le long de lignes respectives inclinées à un angle de 40° par rapport à une ligne normale dudit film optique vers un axe rapide et un axe lent, sont respectivement maintenus pour ne pas dépasser R(0) + 6 nm.

4. Procédé de fabrication du film optique selon l'une quelconque des revendications 1 à 3, comprenant les étapes consistant à extruder une résine thermoplastique non cristalline ayant une température de transition de verre Tg d'une matrice d'exclusion dans un film et à mettre le film en contact étroit avec un rouleau de refroidissement, une température dudit film juste avant son contact avec le rouleau de refroidissement étant maintenue à une température de Tg + 50°C ou plus.

5. Procédé de fabrication d'un film optique selon la revendication 4, dans lequel une température dudit film juste avant son contact avec le rouleau de refroidissement est maintenue à une température de Tg + 80°C ou plus en obtenant de ce fait un film optique ayant une différence de phase résiduelle jusqu'à 3 nm.

6. Procédé de fabrication d'un film optique selon l'une quelconque des revendications 4 et 5, dans lequel ledit film est mis en contact étroit avec le rouleau de refroidissement soit en pressant le film contre le rouleau de refroidissement soit par aspiration d'un côté du rouleau de refroidissement.

7. Procédé de fabrication d'un film optique selon l'une quelconque des revendications 4 à 6, dans lequel, lorsque ladite résine thermoplastique non cristalline est extrudée de la matrice d'exclusion dans le film qui est ensuite mis en contact étroit avec le rouleau de refroidissement, le film est maintenu chaud à l'intérieur d'un espacement d'air s'étendant de la sortie de la matrice à l'interface entre le film et le rouleau de refroidissement.

8. Film optique selon l'une quelconque des revendications 1 à 3, dans lequel ledit film est un film pour protéger un polariseur.

9. Polariseur de feuille comprenant un polariseur et le film optique selon l'une quelconque des revendications 1 à 3 qui est placé sur au moins une surface dudit polariseur.
